# EUROPEAN PATENT APPLICATION

(11) **EP 1 981 157 A1**
(43) Date of publication of application: **15.10.2008**
(21) Application number: 07290452.7
(22) Date of filing: 12.04.2007
(51) Int. Cl.: H02M 1/32

(54) **Power dissipation limiter for a DC/DC converter with a pulse width modulator**

(71) Applicant: Alcatel Lucent, 75008 Paris (FR)
(72) Inventor: Peeters, Frans, 2300 Turnhout (BE); Ramacker, Nico Oscar Andre, 9090 Melle (BE); Op De Beeck, Edmond Celina Jozef, 2800 Mechelen (BE)
(74) Representative: Narmon, Gisèle Marie Thérèse

(57) **Abstract**

A power dissipation limiter (PDL) for a DC/DC converter comprising a Pulse Width Modulator (PWM) adapted to control the voltage at the converter output (OUT). The power dissipation limiter (PDL) comprises a voltage comparator (CPP) to which the converter output is coupled via a first delay circuit (R23, C21, D21, R24) and which is coupled to a power control input (Perr) of the pulse width modulator PWM, through which the PWM can be switched ON and OFF. The PWM, and thus also the converter can thereby be switched OFF after a short delay in case of overcurrent on the load, preventing so excessive power dissipation. The output of the voltage comparator is further coupled to the power control input via a second delay circuit (R26, C22). This second delay circuit maintains the PWM switched OFF for a predetermined time delay relatively longer than that of the first delay circuit. Preferably, the power dissipation limiter comprises a hysteresys circuit with a feedback diode (D22) coupled across the voltage comparator. This hysteresis circuit avoids false switching on the input signal of the voltage comparator.

## Description

The present invention relates to a power dissipation limiter for a DC/DC converter comprising a Pulse Width Modulator coupled an output of said converter and adapted to control the voltage at this converter output.

Such a power dissipation limiter is already known in the art, generally as a built-in overcurrent protection included in the Pulse Width Modulator PWM.

However, such a known pulse width modulator is relatively expensive and it is not easy to adjust the parameters of the build-in overcurrent protection circuit.

An object of the present invention is to provide a power dissipation limiter for a DC/DC converter based on a relatively cheap pulse width regulator and which prevents over heating of the converter while drawing low power in overcurrent condition.

According to the invention, this object is achieved due to the fact that said power dissipation limiter comprises a voltage comparator having an input to which said converter output is coupled via a delay circuit and having an output coupled to a power control input of said pulse width modulator through which said pulse width modulator can be switched ON and OFF.

In this way, the pulse width modulator PWM, and thus also the converter, can be switched OFF after a short delay in case of overcurrent on the load, thereby preventing excessive power dissipation.

Another characterizing embodiment of the present invention is that the output of said voltage comparator is coupled to the power control input of said pulse width modulator via a second delay circuit, said second delay circuit having a time delay relatively longer than the time delay of the first mentioned delay circuit.

This second delay circuit maintains the PWM switched OFF for a predetermined time delay relatively longer than the time delay corresponding to the first delay circuit whereby the PWM was switched OFF.

Also another characterizing embodiment of the present invention is that the output of said voltage comparator is coupled to the power control input of said pulse width modulator via a circuit comprising a forward diode.

This circuit allows short-circuiting the second delay circuit in case of a raising output voltage at the voltage comparator, i.e. in case of overcurrent detected at the converter output. The power dissipated in the load and the converter is thereby significantly decreased.

In a preferred characterizing embodiment of the present invention, said power dissipation limiter comprises a hysteresys circuit comprising a diode forward coupled between the output of the voltage comparator and the first mentioned input thereof.

Owing to this feedback diode coupled across the voltage comparator, this hysteresis circuit avoids false switching on the input signal of the voltage comparator.

Further characterizing embodiments of the present power dissipation limiter are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 shows a DC/DC converter including a power dissipation limiter PDL according to the invention; and
Fig. 2 shows the power dissipation limiter PDL of the invention in more detail.

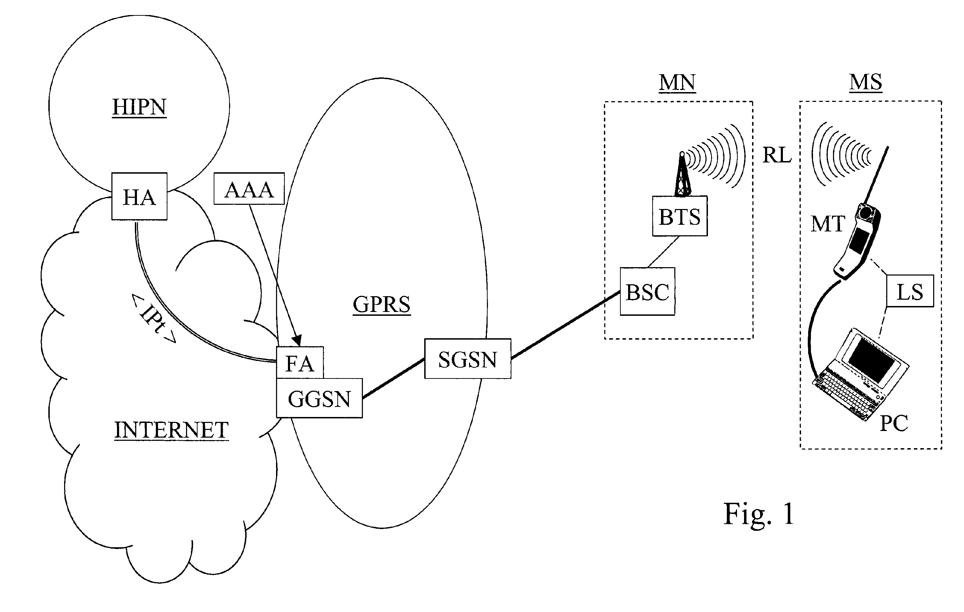

The DC/DC converter or switching mode supply shown at Fig. 1 is adapted to provide a regulated DC voltage at supply output terminals O+ and O- of its output OUT, starting from a battery or any DC supply voltage BATT applied at supply input terminals I+ and I-.

It is to be noted that in the following part of the description, a same label will be used for referring to a terminal and to the signal available at this terminal.

The converter uses well known pulse-width techniques to regulate the output voltage at its output OUT. To this end, the supply input terminal I- is directly connected to the ground GRD, whilst the supply input terminal I+ is coupled to the ground GRD via a capacitor C11 and is further connected to a first terminal of a primary winding N1 of a transformer T1. The second terminal of the winding N1 is coupled to the ground GRD via the series connection of the main path of a power FET M1 and a resistor R11.

The secondary winding N2 of the transformer T1 is coupled to the converter output OUT through a secondary output filter. In more detail, a first terminal of the secondary winding N2 is connected to the anode of a diode D11, of which the cathode is coupled to the supply output terminal O+ via a coil L1. The second terminal of the winding N2 is directly connected to the supply output terminal O-. The cathode of diode D11 is further coupled to the supply output terminal O- via a reverse connected second diode D12, whilst a capacitor C12 is connected across the supply output terminals O+ and O-. A load resistance (not shown) is preferably connected to the converter output OUT across the supply output terminals O+ and O-.

The power FET M1 and the resistor R11 both form part of a regulation circuit for the signal at the supply output terminals O+ and O-. To this end, the converter further comprises a Pulse Width Modulator PWM that is an integrated circuit of which a control output Mout is connected to the gate of the power FET M1.

The pulse width modulator PWM is itself controlled by a current error signal applied to a current control input Ierr of PWM from an output of a current comparator CPI that is an operational amplifier having a first input Isense connected to the junction point between the power FET M1 and the resistor R11, and a second input Ilimit at which the reference of a limit current is applied.

The pulse width modulator PWM is further controlled by a voltage error signal applied to a voltage control input Verr of PWM from an output of a voltage comparator CPV that is another operational amplifier having a first input Vsense coupled to the converter output OUT, and a second input Vref1 at which a like-named reference voltage is applied.

It is to be noted that the converter output OUT is preferably coupled to the voltage input Vsense of the voltage comparator CPV via an optical coupler (not shown).

As already mentioned, the power FET M1 is driven with a pulse generated by the pulse width modulator PWM at its control output Mout. In turn, the power FET M1 generates a pulse across the primary winding N1 of transformer T1. With respect of the transformer T1 ratio this pulse is replicated on the input of de secondary output filter. An average voltage resulting from this pulse is the output voltage at the converter output OUT.

The output voltage at the converter output OUT, or at least a function thereof, is sensed by the voltage comparator CPV and compared with the reference voltage at the input Vref1 of CPV. The resulting voltage error signal at the output of the voltage comparator CPV is fed to the voltage control input Verr of the pulse width modulator PWM. In the PWM the pulse width of the signal provided at the terminal Mout for driving the power FET M1 is adjusted to stabilize the output voltage at OUT.

When the value of the load resistance connected to the converter output OUT decreases, the output voltage tends to drop. As a consequence, the PWM enlarges the pulse width applied to the power FET M1 so that the output voltage stabilizes to a predetermined voltage value.

By decreasing the load resistance, the current delivered to the output OUT increases. The current in the primary winding N1 thereby increases as well so that the value of the signal at the input Isense reaches the value of the reference limit current at the input Ilimit. As a result, the current comparator CPI generates a current error signal that is applied to the current control input Ierr of the PWM. The current error signal overrides the voltage error signal and limits, again via the power FET M1 controlled through the control output Mout of the PWM, the output current at OUT to a predetermined value.

In this current limit mode, the converter still draws a great amount of power from the battery or DC supply BATT. Part of this power is fed to the load, but another part of the power is dissipated in the converter circuitry itself.

In order to dramatically decrease this power dissipation, the pulse width modulator PWM is also controlled by a power dissipation limiter PDL having a limiter input Lin connected to the output of the voltage comparator CPV and having a limiter output Lout connected to a power control input Perr of the pulse width modulator PWM. A signal applied to the power control input Perr of PWM switches ON or OFF this pulse width modulator.

When the current limitation is activated through the current comparator CPI, the output current at OUT is kept at a predetermined constant value and thus, with a still decreasing load resistance, the output voltage at OUT decreases as well. As a result, the voltage error signal at the output of the voltage comparator CPV rises, trying to increase the voltage at the converter output OUT.

This behavior, that generally is a fault condition which may occur in case of failing of the load resistance, is monitored by the power dissipation limiter PDL as will be explained below.

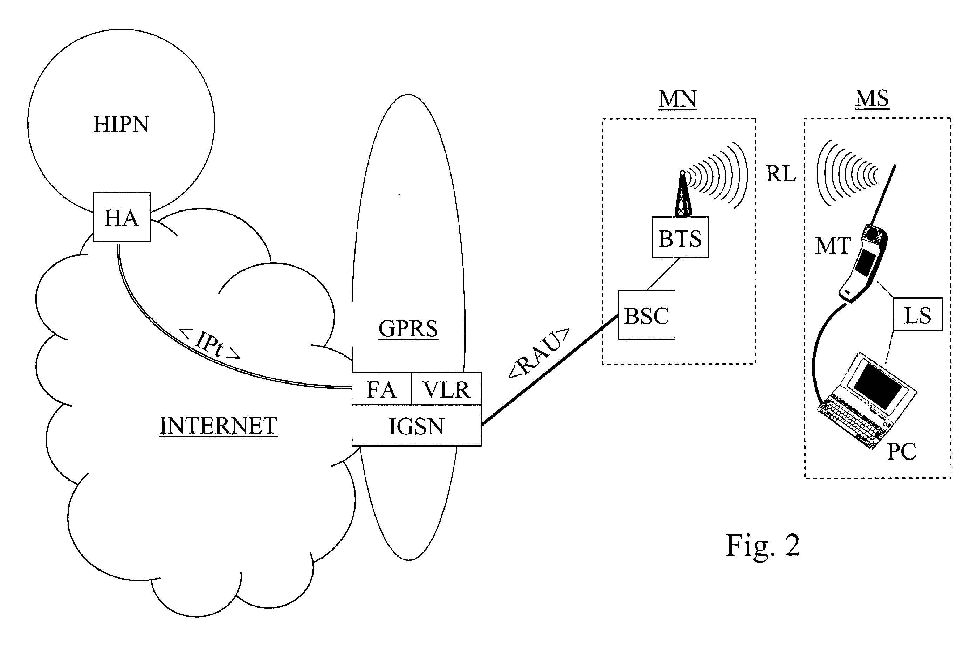

The power dissipation limiter PDL is shown in detail at Fig. 2 and mainly comprises an error voltage detection circuit of which an output is coupled to the power control input Perr of PWM via the series connection of a forward diode D23 and a resistor R27, and the limiter output Lout. The error voltage detection circuit includes a voltage comparator CPP that is a differential amplifier of which the positive input + is coupled to the limiter input Lin via a first delay circuit.

This first delay circuit comprises the series connection of a diode D21 and a resistor R24 coupled in parallel with a resistor R23 interconnecting the limiter input Lin with the positive input + of CPP, this positive input + being coupled to the ground GRD via a capacitor C21.

A reference voltage is applied at a reference terminal Vref2 of the power dissipation limiter PDL. A part of this reference voltage Vref2 is applied to the negative input - of the voltage comparator CPP via the junction point of a resistor R21 and a resistor R22 constituting a voltage divider between the reference terminal Vref2 and the ground GRD.

The power dissipation limiter PDL further comprises a second delay circuit constituted by the series connection of a resistor R26 and a capacitor C22 coupled between the output of the voltage comparator CPP and the ground GRD. The junction point of R26 and C22 is connected to the limiter output Lout.

Finally, a hysteresys circuit comprising the series connection of a forward diode D22 and a resistor R25 is coupled between the output of the voltage comparator CPP and the positive input + thereof.

The operation of the power dissipation limiter PDL is explained below.

In case of the above mentioned fault condition, the error voltage at the voltage control input Verr of PWM is also present at input terminal Lin of PDL. This voltage is fed to the comparator CPP via the first delay circuit D21, R24, R23 and C21.

The voltage comparator CPP then compares the signal at Lin with the voltage derived from the reference voltage at Vref2 via the divider R21, R22.

If the voltage error signal Verr reaches its maximum value, i.e. the value of the reference voltage Vref1, the voltage at Lin is higher than the divided reference voltage at the negative input - of CPP. For a time, of e.g. 10 ms determined by first delay circuit D21, R24, R23 and C21, the output of CPP then becomes high.

The voltage at the output terminal Lout then becomes immediately high via the series connection of the forward diode D23 and the resistance R27 showing a low resistive value.

The resulting signal applied at the power control input Perr of PWM switches OFF this pulse width modulator. As a consequence of the switched OFF pulse width modulator PWM, the voltage at the converter output OUT drops to zero through the controlled power FET M1 (Fig. 1) by which the voltage control input Verr and the error voltage at the input terminal Lin become low.

If the voltage at Lin is lower than the divided reference voltage, for a time determined by the first delay circuit D21, R24, R23 and C21, the output of CPP becomes low.

After a second delay, preferably longer that the first short delay, e.g. of 100 ms, due to the second delay circuit R26 and C22, the limiter output Lout goes low and the pulse width modulator PWM is turned ON again. The converter is then also turned ON again owing to a suitable control output signal provided by PWM at Mout for controlling the power FET M1.

In a preferred embodiment, the components D22 and R25 give the voltage comparator CPP a small hysteresis in order to avoid false switching on the slow (delayed) input signal, because of the presence of capacitor C21 at the positive input + of CPP.

If the fault condition disappears, the converter output voltage at OUT stabilizes again to its predetermined value; if not, the power dissipation limiter PDL carries on operating.

With this action of the power dissipation limiter PDL, the pulse width modulator PWM, in overcurrent mode, will be OFF for a period of time. After this period the converter will try to restart.

The action of the power dissipation limiter PDL reduces the power dissipation in the pulse width modulator PWM and more generally in the whole DC/DC converter or switching mode supply in overcurrent mode and, if the overcurrent disappears, the converter resumes normal function.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A power dissipation limiter (PDL) for a DC/DC converter comprising a Pulse Width Modulator (PWM) coupled an output (OUT) of said converter and adapted to control the voltage at this converter output,
***characterized in that*** said power dissipation limiter (PDL) comprises a voltage comparator (CPP) having an input (+) to which said converter output (OUT) is coupled via a delay circuit (R23, C21, D21, R24) and having an output coupled to a power control input (Perr) of said pulse width modulator (PWM) through which said pulse width modulator can be switched ON and OFF.

2. The power dissipation limiter (PDL) according to claim 1, ***characterized in that*** the output of said voltage comparator (CPP) is coupled to the power control input (Perr) of said pulse width modulator (PWM) via a second delay circuit (R26, C22), said second delay circuit having a time delay relatively longer than the time delay of the first mentioned delay circuit (R23, C21, D21, R24).

3. The power dissipation limiter (PDL) according to claim 1, ***characterized in that*** the output of said voltage comparator (CPP) is coupled to the power control input (Perr) of said pulse width modulator (PWM) via a circuit comprising a forward diode (D23).

4. The power dissipation limiter (PDL) according to claim 1, ***characterized in that*** said power dissipation limiter (PDL) comprises a hysteresys circuit comprising a diode (D22) forward coupled between the output of the voltage comparator (CPP) and the first mentioned input (+) thereof.

5. The power dissipation limiter (PDL) according to claim 1, ***characterized in that*** a reference voltage terminal (Vref2) is coupled to a second input (-) of said voltage comparator (CPP).

6. The power dissipation limiter (PDL) according to claim 1,
***characterized in that*** said converter output (OUT) is coupled to an input (Lin) of the first mentioned delay circuit (R23, C21, D21, R24), of which an output is connected to the first mentioned input (+) of said voltage comparator (CPP), via a voltage comparator (CPV),
*and **in that*** said voltage comparator has a first input (Vsense) coupled to said converter output and a second input connected to another voltage reference terminal (Vrefl).

7. The power dissipation limiter (PDL) according to claim 6,
***characterized in that*** the input of said first delay circuit (R23, C21, D21, R24) is a limiter input (Lin) of said power dissipation limiter (PDL) to which an output of said voltage comparator (CPV) is connected,
*and **in that*** the limiter input (Lin) of said power dissipation limiter is connected to a voltage control input (Verr) of said pulse width modulator (PWM) through which said pulse width modulator is adapted to adjust the voltage at said converter output (OUT).
